# EUROPEAN PATENT APPLICATION

(11) **EP 2 778 689 A1**
(43) Date of publication of application: **17.09.2014**
(21) Application number: 14000914.3
(22) Date of filing: 13.03.2014
(51) Int. Cl.: G01P 15/08

(54) **Impact sensor**

(30) Priority: 15.03.2013 US 201361789258 P
(71) Applicant: PHD, Inc., Fort Wayne, IN 46809 (US)
(72) Inventor: Shepherd, Scott Alan, Hoagland, IN 46745 (US); Davis, James M., Grabill, IN 46741 (US); Cale, Reese M., IN 46745 (US)
(74) Representative: Sawodny, Michael-Wolfgang

(57) **Abstract**

An impact sensor comprises an impact detector that is configured to produce a signal representative of an impact experienced by the impact sensor; and a single signal line for conveying the signal.

A method of conveying information to/from the impact sensor, the method comprises the steps of producing a signal representative of an impact detected by the impact sensor; and stopping a conveying of the signal on the single signal line if the impact has a characteristic that is above a first preselected value.

## Description

### Cross Reference To Related Applications

This is a non-provisional application based upon U.S. provisional patent application serial no. 61/789,258, entitled "IMPACT SENSOR AND PROGRAMMER", filed March 15, 2013, which is incorporated herein by reference.

### BACKGROUND OF THE INVENTION

### 1. Field of the Invention

The present invention relates to impact sensors, and, more particularly, to methods of programming and obtaining information from impact sensors.

### 2. Description of the Related Art

Many industrial and commercial processes involve large forces or velocities during operation. Many means have been developed to control these forces and velocities. A specific example would be cushions and shock absorbers applied to pneumatically operated equipment. Failure of these energy-controlling components can result in rapid damage to equipment and product. As a result, these components are often replaced on a scheduled basis before they actually begin to fail, causing unnecessary expense.

Measuring impacts allow the user to monitor these components to know when operating conditions have changed so that replacement can be made only when necessary but before damage occurs. One traditional way to measure impact would be to use a conventional accelerometer sensor, power supply, signal conditioner, and analog signal input to the control system. Another approach is to convert the vibration signal from a sensor mounted to the relatively stationary surface that the moving component strikes to indicate when the impact force is too high. The first approach requires the user to integrate several components and requires an analog input plus control system processing to interpret the signal. Analyzing the data from the sensor will require a great deal of the control system's processing power, especially if more than a few points must be monitored. The second approach has the disadvantage of offering low sensitivity if the surface impacted is significantly more massive than the moving component.

Shock and impact sensors are types of inertial sensors, which include accelerometers and vibration sensors. Accelerometers can be and often are designed to measure shock as well as acceleration. Shock and impact sensors are designed to detect instances of sudden impact or severe vibration in order to output a value associated with the detected impact or vibration.

Accelerometers have a multitude of applications in industry and science. Sensitive accelerometers are used as components of inertial navigation systems for the navigation of aircraft and guidance of missiles to a target. Accelerometers are also used to detect and monitor vibration in rotating and cyclical machinery. Accelerometers are additionally used in tablet computers and digital cameras so that images on their screens are displayed in an upright manner.

Single- and multi-axis accelerometers are available to detect the magnitude and the direction of the acceleration, with this information being useful in the orientation of an image or an effected device. Micro-machined accelerometers are often used in portable electronic devices and video game controllers, to detect the orientation of the device and/or provide for input from the device.

One problem associated with the prior art is that the devices are not easily configured.

What is needed in the art is an easy to program impact sensor having a simple controlling signal as an output.

### SUMMARY OF THE INVENTION

The present invention provides a system and a method of conveying information from an impact sensor.

The invention in one form is directed to a method of conveying information from an impact sensor. The method includes the steps of producing a signal representative of an impact detected by the impact sensor; and stopping a conveying of the signal on a single signal line if the impact has a characteristic that is above a first preselected value.

The invention in another form is directed to an impact sensor system including a structural element and an impact sensor. The impact sensor is coupled to the structural element. The impact sensor includes an impact detector configured to produce a signal representative of an impact experienced by the structural element. The impact sensor also includes a single signal line for conveying the signal.

The invention in yet another form is directed to an impact sensor including an impact detector and a single signal line. The impact detector is configured to produce a signal representative of an impact experienced by the impact sensor. The single signal line is configured to convey the signal.

An advantage of the present invention is that only a single signal line is needed to receive information from the sensor.

Another advantage of the present invention is that it has two preselected levels that serve as a warning level and a trip level.

Yet another advantage of the present invention is that the sensor produces a digital time based signal thereby reducing the processing required within a controller that receives the signal.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a perspective view of an embodiment of an impact sensor according to the present invention;
Fig. 2 is a front view of a programming device for interfacing with the impact sensor of Fig. 1;
Fig. 3 is a perspective view of a mounting method of the impact sensor of Fig. 1 to a structural element to form an impact sensor system;
Fig. 4 is a perspective view of another mounting method of the impact sensor of Fig. 1 to another structural element to form an impact sensor system;
Fig. 5 is a schematic view of inputs to, and responses of, the impact sensor of Figs. 1, 3 and 4 to those inputs;
Fig. 6 is another schematic view of other inputs to, and responses of, the impact sensor of Figs. 1, 3 and 4 to those inputs;
Fig. 7 is a schematical block diagram of the functions of the impact sensor of Fig. 1, 3 and 4;
Fig. 8 is a functional schematic of the impact sensor of Figs. 1, 3 and 4; and
Fig. 9 is a flow diagram illustrating a method in which the impact sensor of Figs. 1, 3 and 4, works and is programmed to vary parameters therein.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

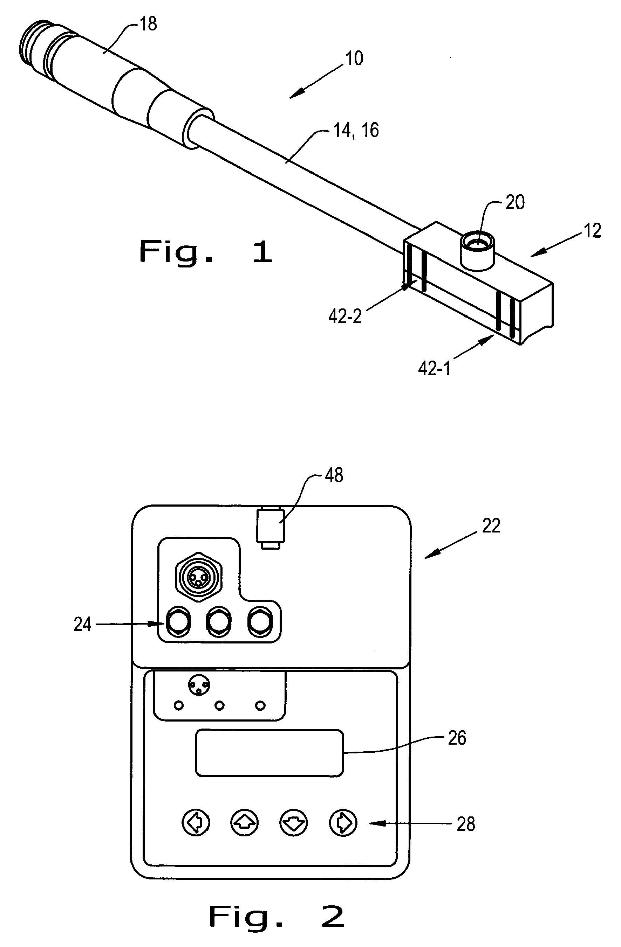

Referring now to the drawings, and more particularly to Fig. 1 there is illustrated an embodiment of an impact sensor apparatus 10 of the present invention.

Definitions of abbreviations used herein include:
I/O - Input/output, specifically as applied to the terminals of common automated industrial control devices.
LED - Light emitting diode, a semiconductor device that converts electrical power into light.
MEMS - Micro-electromechanical system, typically fabricated using the same processes used to create miniature electronic components.
PLC - Programmable logic controller, a common control device used in industry to control automated machines and processes.

Impact sensor apparatus 10 includes an impact sensor device 12, a cable 14 incorporating a single signal line 16, and a connector 18 (although not separately illustrated sensor device 12 may not have a connector 18 and simply have cable 14, which is then directly electrically terminated). Impact sensor device 12 includes a visual indicator 20, which may be in the form of a LED 20. LED 20 displays a status of an output signal of impact sensor device 12 as either red or green, and may use a dynamic of switching between red and green. LED 20 will typically use the colors red and green during normal operation; however, LED 20 also uses several other colors to enhance the user interface aspects of the present invention.

Now, additionally referring to Fig. 2, there is illustrated an embodiment of an interface device 22 that is connectable to impact sensor apparatus 10 by way of connectors 24 or by way of a singular connector above connectors 24, which is configured to connect to connector 18. As can be seen in Fig. 2, connectors 24 and thus cable 14 may have three wires, two to supply power to impact sensor device 12 and a single signal line 16. Single signal line 16 denotes that only a single line is provided for receiving a signal from impact sensor device 12. Interface device 22 also includes a display 26, controls 28 and a slot 48. To program or configure impact sensor device 12, it is slid into slot 48, which is shaped to receive impact sensor device 12 in a select orientation. Within interface device 22 there is a light sensor proximate to where LED 20 is positioned in slot 48 and two electromagnetic coils proximate to where Hall devices 42-1 and 42-2, discussed later, are located. Display 26 displays information from impact sensor device 12 during programming or reading of impact sensor device 12. Controls 28 allow information to be selected for display and to allow the programming of impact sensor device 12. For example preselected impulse levels can be sent to impact sensor device 12 for signal comparison purposes.

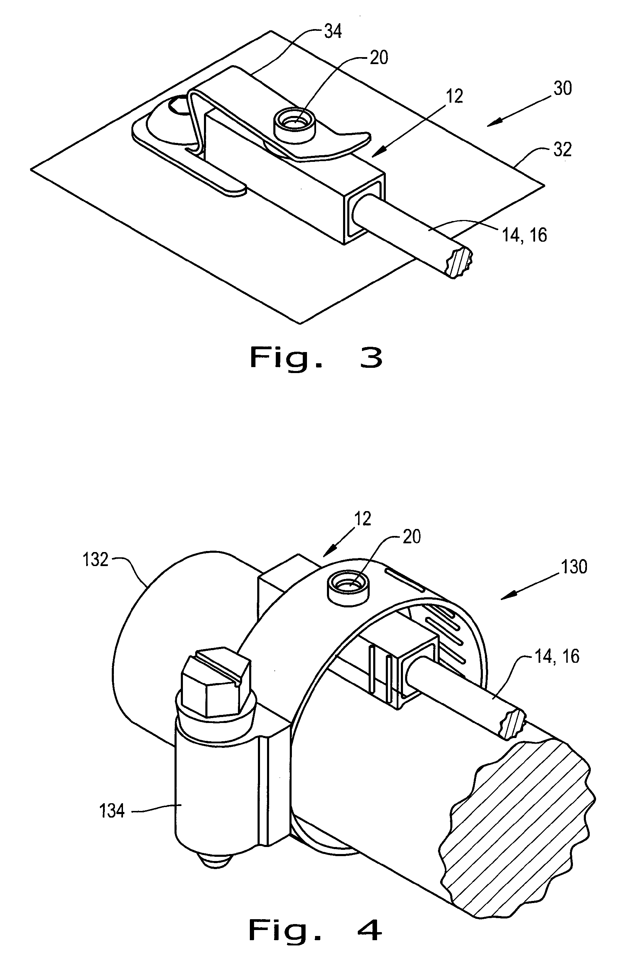

Now, additionally referring to Figs. 3 and 4 are illustrations of ways of mounting impact sensor device 12. Similar items in Figs. 3 and 4 may have 100 added to thereby indicate while they may be depicted in a different fashion the items have a similar function. There is illustrated an impact sensor system 30 having an impact sensor device 12 coupled to a structural element 32 by way of a clamp 34. The clamping of impact sensor device 12 to structural element 32 ensures that the movement and impacts encountered by structural element 32 are detected by impact sensor device 12.

The impact sensor device 12 of the present invention (also referred to as the "KG impact sensor" herein) provides a simple, inexpensive way to monitor impacts within modern machinery. It was specifically designed for, but not limited to, use with medium to large pneumatic applications that require flow controls, cushions, or shock absorbers for proper operation but may also be applied in other applications.

Impact sensor device 12 is intended to open new applications to impact sensing, not to replace instrumentation. In particular, the sensor 12 can signal problems with flow controls, cushions, and shock absorbers before expensive actuator damage occurs. The KG impact sensor uses MEMs and micro-controller technology to provide a complete sensing solution in a small package requiring only three wires: two for power plus a single digital output signal wire. This eliminates the need more expensive analog circuitry and simplifies wiring.

Impact sensor device 12 combines an accelerometer, signal conditioner, analog to digital converter, set point comparison, and configurable output circuits into a small, IP67 rated device. Its output signal is buffered and then sent to the analog to digital converter. After conversion, the result is compared to the two set points. If an action is indicated, the output signal is set accordingly. The micro-controller software allows the user to easily configure the sensor and converts the complex analog impact signal into a single, simple output signal that requires only a single digital input from the user's machine control circuitry. The software allows the user to utilize accelerometer technology without needing to learn the details of acceleration sensors, signal conditioning circuits, and special power supplies.

The output signal is fail-safe, meaning a normally closed "on" signal is provided during normal operating conditions. Absence of the signal indicates an impact has exceeded a set point or a connection problem. This allows detection of a wire break or continuity error so the application remains protected. The single digital output can indicate two different internal set points. These set points are called "trip" and "warn" and are latching and non-latching, respectively. The KG impact sensor may use both set points "Dual Point Mode" or each one separately "Single Point Mode".

An impact exceeding the "warn" (non-latching) set point causes the output to turn "off" for 50 milliseconds and then to automatically turn back on. During this period, the LED 20 will appear to blink red. The sensor continues to monitor the accelerometer during this short period to see if the second set point is reached. If the impact exceeds the "trip" (latching) set point, the signal is permanently turned "off". LED 20 will remain red. Impact sensor device 12 continues to monitor the accelerometer for a brief period after a "trip" is detected. The largest value recorded during that period is saved in the sensor as "LAST IMPACT". This can be read directly by the KG Programmer 22 or with a manual technique. The LED 20 will remain red until power is cycled, which resets impact sensor device 12.

KG Impact Sensor 12 constantly monitors impacts of the mass 32 to which it is attached. It provides a time-based signal driven by one or more user-defined set points indicating excessive impact or erratic operation. The "warn" or "trip" signal can be interpreted by a device, which then performs an appropriate function. Functions include, but are not limited to: Operator alert devices (illuminated lights, audible alarms) and machine stoppage (preventing catastrophic failure, bad product manufacture).

The user is able to digitally configure the set point values specific to their application and whether these points are monitored together or individually. The KG Impact Sensor is available preset from the factory or set on-site by the user using programming interface 22. Set point values can be modified at any time. The KG Impact Sensor 12 is also able to measure an impact and relay that value to the user. This is helpful for diagnostics or during initial set up of the KG Impact Sensor 12. Impacts and set points are indicated in g-force.

Use of the optional KG Programmer 22 unlocks the total potential and flexibility of the KG Impact Sensor 12. With the programmer 22, the end user is able to modify the circuit type (SINK/NPN or SOURCE/PNP), whether sensor 12 is in Dual or Single Point Mode, and the value of the set point(s). In addition, the KG Programmer 22 simplifies setting up the KG Impact Sensor 12. Lastly, a single programmer has the ability to service an unlimited number of impact sensors throughout an entire plant.

IMPACT SENSOR 12 FEATURES
- Bi-directional single axis sensitivity
- Single or dual point operation
- User defined, rewriteable set-points
- Attaches easily to moving mass
- Multi-color LED for visual monitoring
- Fail-safe output signal
- Available preset or field programmable
- 3 pin quick connect option
- Optional programmer available

IMPACT SENSOR USES
- Predictive maintenance device
   - Detects changes in impact force
   - Can help to reduce unanticipated downtime
   - Minimizes unnecessary preventive maintenance
- Maintenance tripwire
   - Flags personnel of a machine crash
   - Can stop production of bad parts when a severe crash is detected
   - Prevents/detects product damage by detecting abnormal machine operation
- Benchmarking
   - Measures impact
   - Provides an input for an event counter of impacts or extreme vibration
   - Monitors centripetal forces

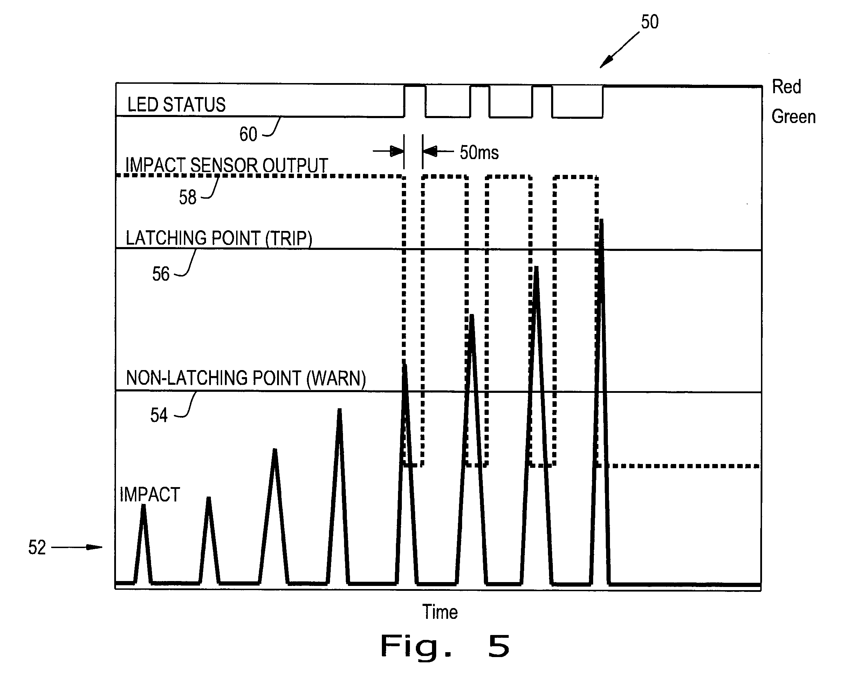

Now, additionally referring to Fig. 5, there is illustrated signals 50 including multiple impacts 52 that are sensed, a preselected value non-latching point (Warn) 54, a preselected value latching point (Trip) 56, sensor signal 58 shown here as impact sensor output 58 and LED status 60. As normal impacts 52 increase and exceed the non-latching point 54, the fail-safe signal 58 drops for 50 milliseconds with every excessive impact. A programmable logic controller (PLC) that is monitoring the signal 58 can utilize timer logic to issue an appropriate action, alert, or warning depending upon signal 58. When the impact 52 increases beyond the latching point 56, the fail-safe signal 58 permanently drops and the PLC can determine the appropriate action to protect the machine and products made by the machine.

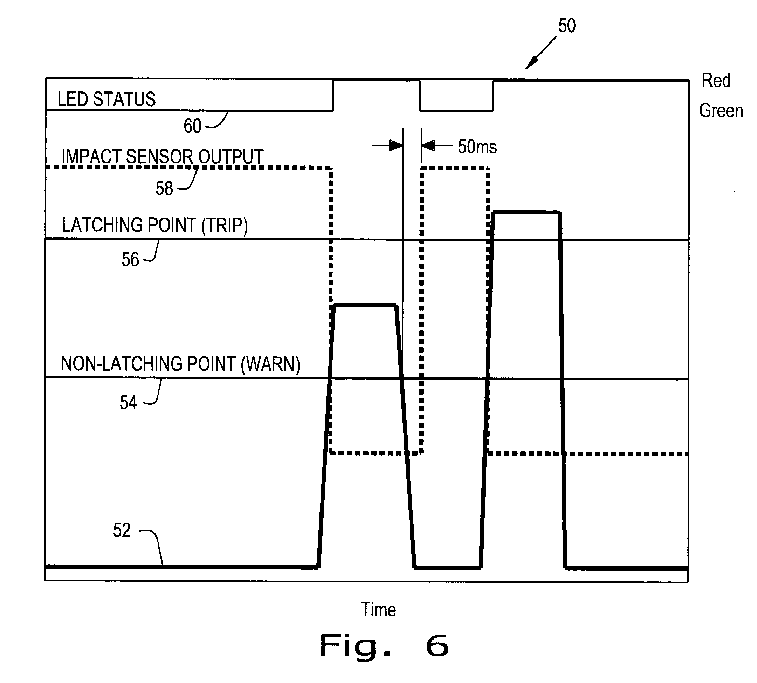

Now, additionally referring to Fig. 6, in the case of constant acceleration or centripetal motion where the profile is flat or has an extended duration, the fail-safe signal 58 remains low, returning high 50 ms (or other predetermined time) after the force falls below the non-latching point 54. If the latching point 56 is exceeded, the fail-safe signal 58 permanently drops, until reset.

To reset impact sensor device 12 from a latched condition, power must be cycled to sensor 12. An allowance of 200 ms for sensor initialization before returning to normal operation is typically required.

LED status 60 may indicate that the low condition may indicate the LED 20 is green and the high may indicate LED 20 is red. Other signaling scenarios are contemplated such as different colors, blinking sequences, and intensity levels to name a few.

Proper cable management is critical to the operation of the impact sensor. All cabling must be secured as not to influence the motion of the sensor 12 in any way.

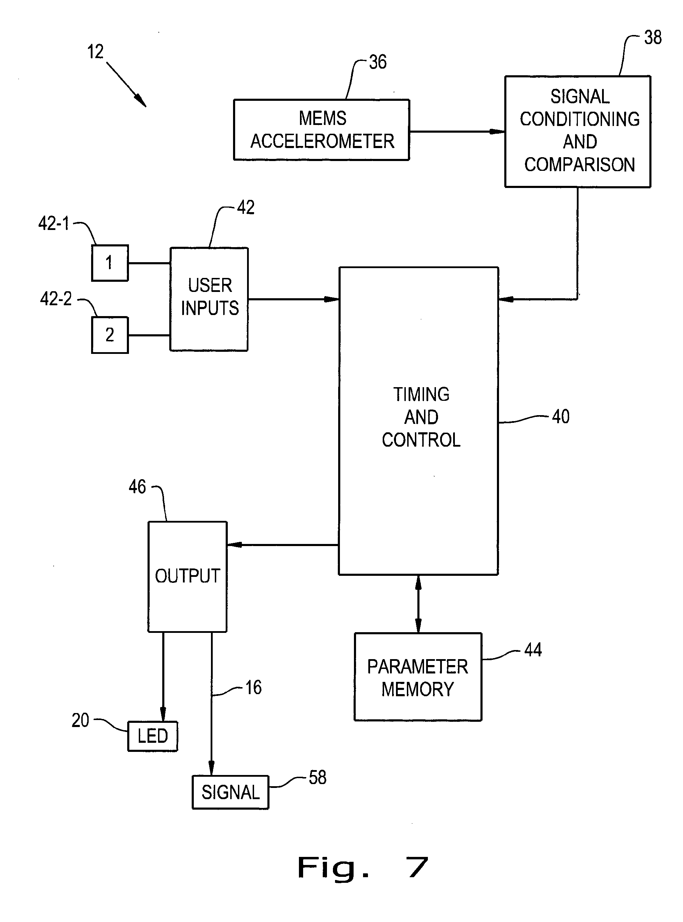

Now, additionally referring to Fig. 7, further details of sensor 12 are illustrated. The present invention overcomes the problems encountered with the prior art. Sensor 12 combines an acceleration sensor 36, power conditioning, signal conditioning and processing circuits 38, timing and control functions 40, user inputs 42, a parameter memory 44, and output functions 46 into a small, robust, environmentally protected housing. This low mass assembly may be easily mounted to the moving component, as illustrated in Figs. 3 and 4, to provide accurate measurement of the moving assembly itself instead of inferring forces from a secondary mass via impact vibration. It also interprets the internal, rapid analog signals against the user's predefined settings to provide a simple, time based, digital output. This digital output may be used directly (to activate a relay, for example), or supplied to an input terminal of the PLC controlling the machine on which the components are mounted. The output signal 58 uses time to indicate a measured value relative to the user settings and may be easily interpreted by almost any PLC program using the input timer function. The unit draws only a small amount of power increasing its utility in this type of application. By powering the unit from one of the PLC outputs and reading its signal 58 with one of the PLC inputs, it may be completely controlled, including its reset function, using only two PLC I/O lines.

Sensor 12 uses a MEMS accelerometer 36 to sense impacts. This type of device is commonly used to detect impact and is used in other impact sensing applications such as automotive airbag deployment. The signal from the accelerometer 36 is adjusted to improve accuracy and the output therefrom is compared to the set points selected by the user.

Timing and control function 40 coordinates the interpretation of the sensor signal, the comparison to the user settings memory 44, the monitoring of the user inputs 42, and the setting of the output 46 conditions. To guarantee reliable operation and predictable performance for both impact sensing and the user interface, the control function scans continuously at a rate significantly faster than the response rate of the MEMS accelerometer 36 to assure timely updates to the output signal 58.

The output function 46 provides both electrical and visual indication of the sensor status during operation. It also provides feedback to the user or the programmer during user interface activities such as reading or setting parameters.

The user input function 42 incorporates logic and circuitry to prevent unintended transition to the user interface mode and allows the user to change settings, configure output condition, and read recent status from the device memory 44.

A preferred embodiment of the impact sensor 12 provides several useful features in addition to sensing impact. The user interface is by way of magnetic sensors 42-1 and 42-2 and a multicolor LED 20 allowing sensor 12 to be small and hermetically sealed for use in environments contaminated with fluids and dirt. This interface also permits use by a human using a simple magnet or by way of an optional programming device 22. An illustration of the preferred embodiment is shown in Fig. 1.

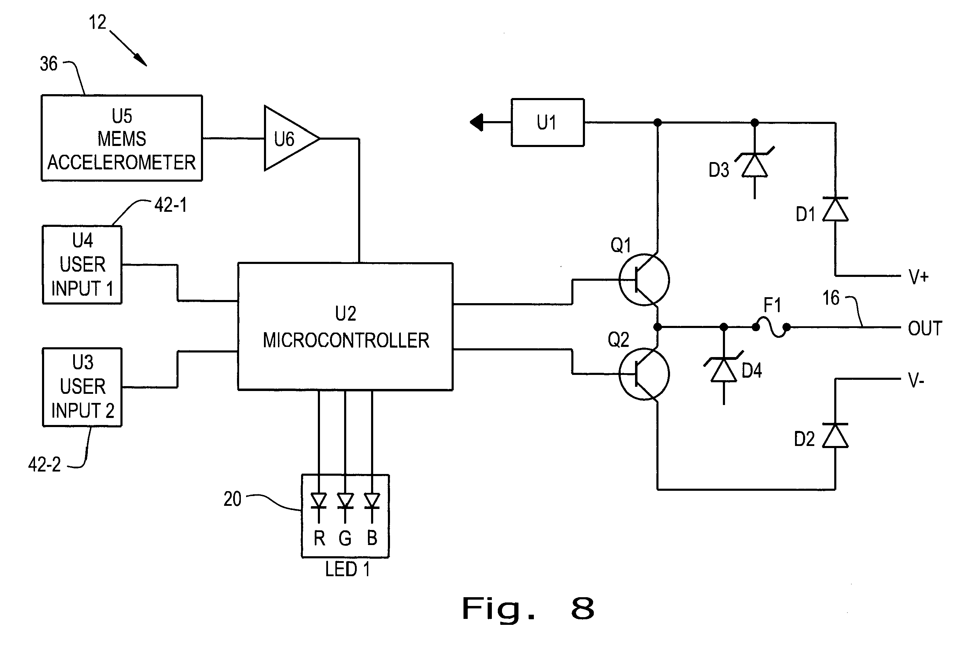

Now, additionally referring to Fig. 8, there is illustrated a simplified schematic of the preferred embodiment. Diodes D1 through D4 and current limiter F1 protect the electrical connections of the impact sensor 12. Semiconductor switches Q1 and Q2 provide a user configurable output signal 58. Power regulator U1 provides regulated voltage for powering the components as well as the reference voltage for the analog to digital conversion. Microcontroller U2 provides the timing and control functions 40 as well as configurable memory 44 to store user parameters. User output is provided by a red-green-blue light emitting diode 20. User input is by way of Hall switches U3 (42-2) and U4 (42-1). The MEMS accelerometer U5 (36), provides a low current ratiometric signal to buffer amplifier U6. The buffered signal is then delivered to an analog to digital converter peripheral contained within microcontroller U2.

The user configurable output 16 may either push (source) or pull (sink) current. This allows the device be used with nearly any common industrial programmable logic controller. Many industrial sensors do not feature this advantage, forcing the user to select the appropriate type when ordering and requiring the manufacturer to inventory two versions to support their customers. The output also uses additional components (D1 through D4, and F1) to protect against reversed connections, transient voltages, and sustained excessive current common in the environment where this type of sensor is employed.

Two magnetically sensitive Hall switches U3 and U4 provide the user input interface via a magnet. The Hall switches are physically separated within sensor 12, to make it easy for the user to select either Hall switch separately. For example, Hall switch U3 may be on one end of sensor 12 and Hall switch U4 may be on an opposite end of sensor 12 with LED 20 being between them. Many different techniques could be used to allow user input, even conventional push button switches. However, the Hall switches are robust, inexpensive and may be completely sealed to protect them from the environment. For the purposes of this description, user input 2 (42-2) is located nearest to the end of the housing with the cable connection, while user input 1 (42-1) is near the opposite end of the unit.

The Microcontroller U2 performs all timing and control functions 40 and also stores the user settings and operating information in static memory so that the settings are maintained in the absence of a power source.

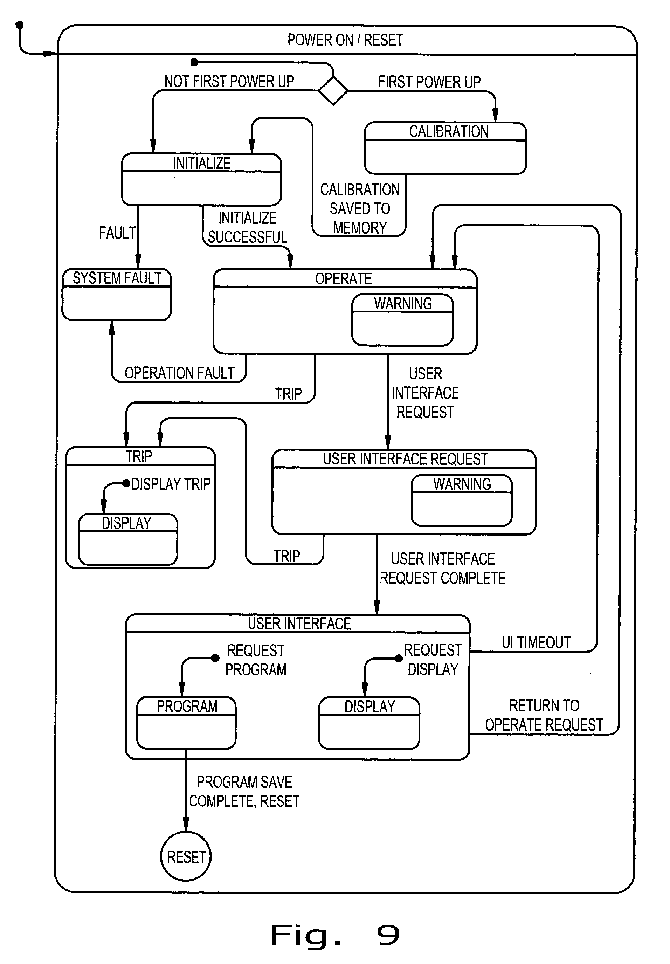

Now, additionally referring to Fig. 9, there is illustrated a high level state diagram of the software of the preferred embodiment of the present invention. Much of the functionality of the impact sensor is derived from its software. The operation of the software by way of the different states will be described below and essentially proceeds through Fig. 9 from top to bottom.

Upon microcontroller startup, either due to power up or internal reset, the unit checks non-volatile memory to see if this is the very first application of power. If it is the first power up, the unit enters the CALIBRATION state to improve accuracy. One specific function of the CALIBRATION state is to correct the offset error of the specific MEMS accelerometer 36 used in the assembly. This correction is permanently saved to non-volatile memory 44.

Once the CALIBRATION state is finished, or on any subsequent startup, the microcontroller enters an INITIALIZE state. In this state, the microcontroller peripheral registers are set and mathematical functions convert user variables into register values to speed computation during normal operation. In the event of a defined error, the microcontroller will enter a SYSTEM FAULT state.

The SYSTEM FAULT state flashes LED indicator 20 red. The flashing distinguishes this state from the continuous red indication of the TRIP state. The only way to clear this state is to cycle the power to sensor 12. If the system fault clears itself, sensor 12 will return to normal operation.

Following successful initialization, the microcontroller will enter the OPERATE state. In this state the sensor monitors the signal from accelerometer 36 and one of the user inputs. It also controls the output signal 58 based on the user configuration. Predefined errors occurring within the OPERATE state can cause the microcontroller to enter the SYSTEM FAULT state. The sensor uses a "normally closed" type of output to provide "fail safe" operation. The output 16 is "on" during normal operation. Output 16 turns "off" to indicate that the warning or trip set points have been reached or exceeded. Should the output signal wire 16 or connection fail, it will appear as a loss of output signal 58 to the control system.

The signal from accelerometer 36 caused by impact 52 is compared to the user set points 54 and 56 stored in non-volatile memory 44. If the "warning" set point 54 is reached the output signal 58 is turned off for 50 milliseconds and then turned on again. While the output 58 is off, the normally green LED 20 changes to red. The signal from accelerometer 36 is still sampled during the "warning" signal event. The output signal 58 remains off as long as the signal is above the "warning" set point 54. When the signal from accelerometer 36 drops below the "warning" set point 54, the output signal 58 is maintained off for an additional 50 milliseconds and then returns to normal. If the signal from accelerometer 36 reaches the "trip" set point 56 at any time, the unit leaves the OPERATE state and enters the TRIP state. The behavior of the output 58 is shown graphically in Figs. 5 and 6.

The TRIP state sets the output 58, changes the LED indicator 20, saves the highest impact value, and provides a means for the user to display that value. As soon the TRIP state is entered, the output is turned off and the LED indicator 20 is set to red. The microcontroller continues to monitor the accelerometer for a brief period after entering the TRIP state and saves the highest impact value during that time period to memory 44. Without this feature, the recorded value would be identical or very close to the user setting. By sampling beyond the set point, the value saved will be closer to the maximum impact. The user can manually read this value while in the TRIP state by simultaneously activating both user input sensors 42-1 and 42-2. The LED indicator 20 will flash the measured value using different colors and then revert to the steady red indication. The user may repeat this action as many times as desired while the unit is in the TRIP state. The user may also use programmer 22 to read this value at any time. Changing the set points will serve to reset this value to zero. To return the unit to normal operation, the power to the unit must be turned off and then restored. This resets the unit as described at the beginning of this section. The behavior of the output is shown graphically in Figs 5 and 6.

The OPERATE state also continuously scans user input 1 (42-1), the first of two user input sensors. In the preferred embodiment, these inputs incorporate Hall sensor technology and respond to magnetic fields. However, these could be any technology that allows the user to interact with the device, such as pushbutton, inductive, or light sensing devices. If the user input remains active for a specified length of time, the microcontroller will enter the USER INTERFACE REQUEST state.

The USER INTERFACE REQUEST state confirms that a user interface request is valid while maintaining the protection of the OPERATE mode. In this state, the accelerometer signal is still scanned and the output signal 58 is controlled based on the user set points 54 and 56. The LED indicator 20 changes from green to purple to indicate the state change from OPERATE. In order to prevent accidentally entering the USER INTERFACE state, a special sequence is required that would be very unlikely to occur during normal operation. In the preferred embodiment, this sequence is a long activation of user input 1 (42-1), then three separate brief activations of user input 2 (42-2), concluding with a final long activation of user input 1 (42-1). This sequence must occur within a predetermined time period (approximately 30 seconds) or the unit will return to the OPERATE state. If the sequence is entered in time, the microcontroller enters the USER INTERFACE state. Other activation sequences are also contemplated.

The USER INTERFACE state allows the user to display or change the set points 54 and 56 and output configuration of the sensor. Upon entering the USER INTERFACE state, the LED indicator 20 turns blue, scanning of the accelerometer signal and comparison of it to set points 54 and 56 is stopped, and the output 58 is turned off. Activating user input 1 (42-1) briefly will cause the LED indicator 20 to flash different colors that display the values for the trip set point, the output configuration, and the warning set point in order. If user input 1 (42-1) activation is maintained, this sequence will begin but will then quickly return to the normal operating state. This provides a means for the user to quickly return to the OPERATE state. The USER INTERFACE state will also automatically return to the OPERATE state after a predetermined time period with no user activity.

The user may also change the settings of the sensor by briefly selecting user input 2 (42-2). Each selection of user input 2 (42-2) advances to the next selection, which is indicated by a color change of the LED indicator 20. To enter a different value for a setting, user input 1 (42-1) is briefly selected. If the setting has only two values, such as the output configuration, each brief selection of user input 1 (42-1) will alternate between these values, indicated by two different colors of the LED indicator 20. When the desired value is indicated, the user simply selects user input 2 (42-2) briefly to move to the next selection. If the selection requires a numeric value, the LED indicator 20 will display a very rapid flash to indicate the starting value of zero. Each brief selection of user input 1 (42-1) increments the value by one. The LED also flashes off briefly at each increment for user feedback. The counter recycles at the end of the allowable input range and returns to zero. This allows the user to easily return to zero and restart if he is uncertain of his entry. A specific setting of a numeric selection, such as zero, can allow its function to be intentionally disabled. To move to the next selection, user input 2 (42-2) is briefly selected, the LED 20 color changes to indicate the new selection. If the user advances through a selection without changing it, it retains its previous value.

When the user has advanced through all the available selections, the LED 20 rapidly alternates between red and yellow to indicate the end of the selection set. At this point, any changes have not been saved to non-volatile memory 44. If the user waits until the USER INTERFACE state time period expires, approximately one minute, the unit will revert to the OPERATE state without saving the changes. The user may also select user input 1 (42-1) if he wishes to return to the OPERATE state without saving his changes. In this case, the LED 20 will start slowly flashing blue. The speed of the flash will increase until the blue color is constant and then the unit will enter the OPERATE state. If the user wishes to save his changes, user input 2 (42-2) is selected and held. The LED will begin to slowly flash green. The speed of the flash will increase until the green color is constant and then the unit will save the values to non-volatile memory and perform a software reset. The unit will then automatically restart with the new values.

In one embodiment, a programming device 22 is available to automate the display and setting process described above to simplify these processes for the user. This device is illustrated in Fig 2 and is used to perform the functions described above. Sensor 12 is slid into slot 48 and electromagnets control inputs 42-1 and 42-2, with the output of LED 20 being received by a light sensitive sensor. Controls 28 are used to select options displayed on display 26 to read the status of sensor 12 and to configure the set points, by triggering the electromagnets and receiving the light output of LED 20, in a user-friendly manner.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

The invention comprises aspects which are disclosed in the sentences below, which are part of the description, but not lciams in accordance with J15/88 of the boards of appeal

### Sentences

1. An impact sensor system, comprising:
   a structural element; and
   an impact sensor coupled to the structural element, said impact sensor including:
      an impact detector configured to produce a signal representative of an impact experienced by the structural element; and
      a single signal line for conveying said signal.
2. The impact sensor system of sentence 1, wherein said single signal line is configurable as one of a source output and a sink output.
3. The impact sensor system of sentence 1, wherein the impact sensor is configured to stop conveying said signal on said single signal line if the impact has a characteristic that is above a preselected value.
4. The impact sensor system of sentence 3, further comprising a programming device configured to program said preselected value into the impact sensor by way of timed activation of switches in the impact sensor.
5. The impact sensor system of sentence 1, wherein the impact sensor is configured to stop conveying said signal on said single signal line for a predetermined time if the impact has a characteristic that is above a first preselected value.
6. The impact sensor system of sentence 5, wherein the impact sensor is further configured to stop conveying said signal on said single signal line for said predetermined time if the impact has the characteristic that is between said first preselected value and a second preselected value.
7. The impact sensor system of sentence 6, wherein the impact sensor is further configured to stop conveying said signal on said single signal line for a duration of time equal to the sum of a duration of time that the impact continues to have the characteristic that is between said first preselected value and said second preselected value and said predetermined time.
8. The impact sensor system of sentence 7, further comprising a visual indicator reflective of one of a presence and non-presence of said signal.
9. The impact sensor system of sentence 7, wherein the impact sensor is further configured to stop conveying said signal on said single signal line once the impact characteristic exceeds said second preselected value until the impact sensor is reset.
10. An impact sensor, comprising:
   an impact detector configured to produce a signal representative of an impact experienced by the impact sensor; and
   a single signal line for conveying said signal.
11. The impact sensor of sentence 10, wherein the impact sensor is configured to stop conveying said signal on said single signal line if the impact has a characteristic that is above a first preselected value.
12. The impact sensor of sentence 11, wherein the impact sensor is further configured to stop conveying said signal on said single signal line for said predetermined time if the impact has the characteristic that is between said first preselected value and a second preselected value.
13. A method of conveying information to/from an impact sensor, the method comprising the steps of:
   producing a signal representative of an impact detected by the impact sensor; and
   stopping a conveying of said signal on a single signal line if the impact has a characteristic that is above a first preselected value.
14. The method of sentence 13, wherein said stopping step includes the step of stopping of the conveying of said signal on said single signal line for a predetermined time if the impact has a characteristic that is above said first preselected value.
15. The method of sentence 14, wherein said stopping step further includes the step of stopping the conveying of said signal on said single signal line for said predetermined time if the impact has the characteristic that is between said first preselected value and a second preselected value.
16. The method of sentence 15, wherein said stopping step further includes stopping the conveying of said signal on said single signal line for a duration of time equal to the sum of a duration of time that the impact continues to have the characteristic that is between said first preselected value and said second preselected value and said predetermined time.
17. The method of sentence 16, wherein said stopping step further includes stopping the conveying of said signal on said single signal line once the impact characteristic exceeds said second preselected value until the impact sensor is reset.
18. The method of sentence 13, further comprising the step of activating a visual indicator reflective of one of a presence and non-presence of said signal.
19. The method of sentence 13, further comprising the step of programming the impact sensor including the sub-steps of:
   interacting with at least two magnetic sensors in the sensor using a magnet; and
   receiving feedback from a light emitting output.
20. The method of sentence 13, further comprising a step of programming said first preselected value into the impact sensor using a programming device.

## Claims

1. An impact sensor, comprising:
an impact detector configured to produce a signal representative of an impact experienced by the impact sensor; and
a single signal line for conveying said signal.

2. The impact sensor of claim 1, wherein the impact sensor is configured to stop conveying said signal on said single signal line if the impact has a characteristic that is above a first preselected value.

3. The impact sensor of claim 2, wherein the impact sensor is further configured to stop conveying said signal on said single signal line for said predetermined time if the impact has the characteristic that is between said first preselected value and a second preselected value.

4. An impact sensor system, comprising:
a structural element; and
an impact sensor according to one of the claims 1 to 3 coupled to the structural element.

5. The impact sensor system of claim 4 , further comprising a programming device configured to program said first and/or second preselected value into the impact sensor by way of timed activation of switches in the impact sensor.

6. The impact sensor system of at least one of the claims 4 to 5, wherein the impact sensor is further configured to stop conveying said signal on said single signal line for a duration of time equal to the sum of a duration of time that the impact continues to have the characteristic that is between said first preselected value and said second preselected value and said predetermined time.

7. The impact sensor system of claim 6, further comprising a visual indicator reflective of one of a presence and non-presence of said signal.

8. The impact sensor system of of at least one of the claims 4 to 7, wherein the impact sensor is further configured to stop conveying said signal on said single signal line once the impact characteristic exceeds said second preselected value until the impact sensor is reset.

9. A method of conveying information to/from an impact sensor, the method comprising the steps of:
producing a signal representative of an impact detected by the impact sensor; and
stopping a conveying of said signal on a single signal line if the impact has a characteristic that is above a first preselected value.

10. The method of claim 9, wherein said stopping step includes the step of stopping of the conveying of said signal on said single signal line for a predetermined time if the impact has a characteristic that is above said first preselected value.

11. The method of claim 10, wherein said stopping step further includes the step of stopping the conveying of said signal on said single signal line for said predetermined time if the impact has the characteristic that is between said first preselected value and a second preselected value.

12. The method of claim 11, wherein said stopping step further includes stopping the conveying of said signal on said single signal line for a duration of time equal to the sum of a duration of time that the impact continues to have the characteristic that is between said first preselected value and said second preselected value and said predetermined time.

13. The method of claim 12, wherein said stopping step further includes stopping the conveying of said signal on said single signal line once the impact characteristic exceeds said second preselected value until the impact sensor is reset.

14. The method of at least one of the claims 10 to 13, further comprising the step of activating a visual indicator reflective of one of a presence and non-presence of said signal.

15. The method of at least one of the claims 10 to 14, further comprising the step of programming the impact sensor including the sub-steps of:
interacting with at least two magnetic sensors in the sensor using a magnet; and
receiving feedback from a light emitting output.
